# EUROPÄISCHE PATENTSCHRIFT

(11) **EP 0 811 773 B1**
(45) Veröffentlichungstag und Bekanntmachung des Hinweises auf die Patenterteilung: **24.07.2002**
(21) Anmeldenummer: 97108657.4
(22) Anmeldetag: 30.05.1997
(51) Int. Cl.: F16B 13/00, F16B 5/02, E04B 9/00, E04B 1/76, F16B 33/02

(54) **Einrichtung zur distanzierten Befestigung von Wärmedämmplatten an Wänden**
Device for distance fixing of isolation panels to walls
Dispositif pour la fixation à distance de plaques d'isolation aux murs

(30) Priorität: 07.06.1996 AT 98296
(43) Veröffentlichungstag der Anmeldung: 10.12.1997
(73) Patentinhaber: Holzinger, Alois, sen., 6800 Feldkirch (AT)
(72) Erfinder: Holzinger, Alois, sen., 6800 Feldkirch (AT)
(74) Vertreter: Hefel, Herbert, Dipl.-Ing.

(56) Entgegenhaltungen:
- WO-A-96/16273
- US-A- 2 337 984

## Beschreibung

Die Erfindung bezieht sich auf eine Einrichtung zur distanzierten Befestigung von Wärmedämmplatten an Wänden, Decken o. dgl.

Zur Befestigung von Wärmedämmplatten an Wänden oder Decken werden Kleber verwendet, wenn die Platte unmittelbar an der Wand oder Decke festzulegen ist. Falls die Dämmplatte jedoch von der Wand oder Decke einen Abstand aufweisen soll, dienen zur Festlegung Schraubanker oder Metallstifte, die mit ihrem einen Ende in der Wand oder Decke eingeschraubt oder eingeschlagen werden. An ihrem äußeren Ende ist eine tellerartige Scheibe, die dann an der Außenseite der Wärmedämmplatte formschlüssig anliegt. Solche Schraubanker oder Metallstifte können auch dann verwendet werden, wenn die Dämmplatte unmittelbar an der Wand oder Decke anliegen soll. Die außenseitig liegende tellerartige Scheibe, die eine gewisse Bauhöhe haben, müssen dann verspachtelt werden, bevor das Armierungsgewebe und die abschließenden Putzschichten aufgebracht werden.

Aus der US-PS 5 449 257 ist ein selbstbohrender Dübel bekannt. Dieser selbstbohrende Dübel aus Kunststoff besitzt einen Schaft mit einer Längsbohrung, der endseitig V-förmig eingeschnitten ist zur Bildung von Bohrschneiden. Ferner besitzt dieser Dübel einen kegelförmigen Kopf (Senkkopf), in welchem die zentrale Bohrung in einen Kreuzschlitz übergeht, um hier ein Drehwerkzeug anzusetzen. Dieser Dübel dient dazu, eine Befestigungsschraube aufzunehmen, mit welcher irgendein Gegenstand, beispielsweise ein Beschlagteil an einer Wand zu befestigen ist, wenn diese Wand nur geringe Tragfähigkeit besitzt. An der Außenseite des Schaftes ist ein ausladender Gewindegang angeformt, um diesen Dübel in der nicht tragfähigen Wand zu sichern, wobei durch die Ausgestaltung der ausladenden Gewindegänge die spezifische Flächenbelastung reduziert werden soll.

Ausgehend von diesem Stand der Technik und zur Bereitstellung einer verbesserter Einrichtung, die eine hohe Tragfähigkeit aufweist, schlägt die Erfindung jene Maßnahmen vor, die Inhalt und Gegenstand des Patentanspruches 1 sind.

Ausführungsbeispiele der Erfindung werden anhand der Zeichnung näher veranschaulicht. Es zeigen:
Fig. 1 eine Seitensicht der Einrichtung - zum Teil aufgerissen;
die Fig. 2 und 3 vertikale Längsschnitte durch eine an einer Wand zu befestigende Wärmedämmplatte, wobei die beiden Figuren zwei aufeinanderfolgende Arbeitsschritte der Montage veranschaulichen;
Fig. 4 eine Seitensicht einer zweiten Ausführungsform der Einrichtung, zum Teil aufgerissen;
Fig. 5 eine Stirnansicht der Einrichtung nach Fig. 1, Blickrichtung Pfeil A in Fig. 1 und
Fig. 6 eine Stirnansicht einer weiteren Ausgestaltung der erfindungsgemäßen Einrichtung;
Fig. 7 eine Seitenansicht einer weiteren Ausführungsvariante der Einrichtung, zum Teil aufgerissen;
die Fig. 8 ein weiteres Ausführungsbeispiel der Erfindung und die
Fig. 9 eine Ansicht derselben - Blickrichtung Pfeil C in Fig. 8 und
Fig. 10 eine weitere Ansicht - Blickrichtung Pfeil D in Fig. 8.

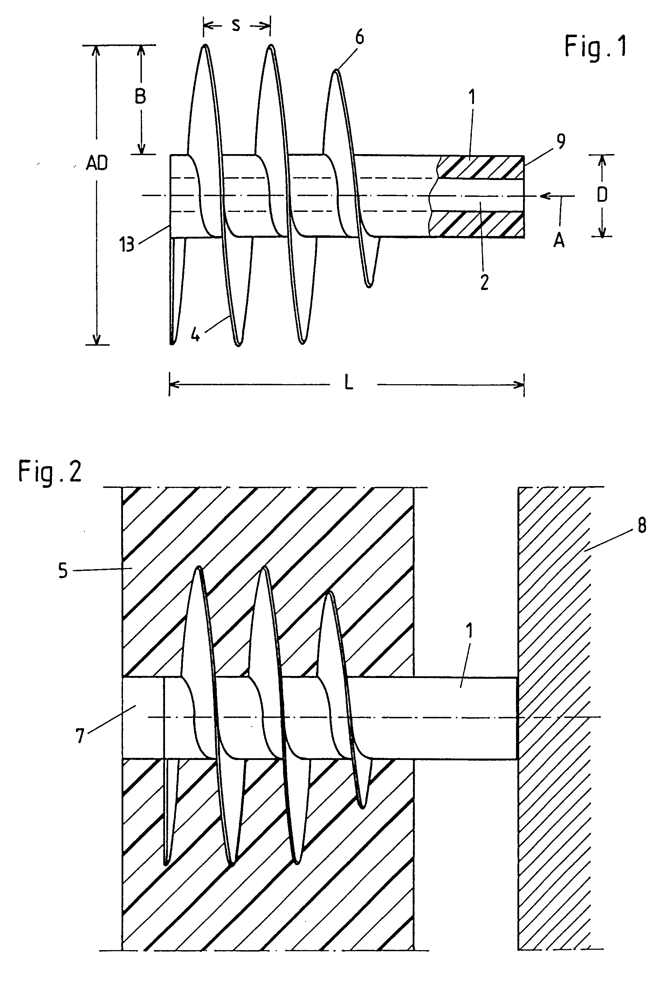

Die in Fig. 1 veranschaulichte Einrichtung, die beispielsweise einstückig aus einem geeigneten Kunststoff gefertigt ist, besitzt einen zentralen Schaft 1, der von einer Längsbohrung 2 durchsetzt ist zur Aufnahme einer Befestigungsschraube 3, wobei der Außendurchmesser der Befestigungsschraube dem Durchmesser der Längsbohrung 2 entspricht, so daß die Befestigungsschraube 3 durch die Längsbohrung 2 hindurchsteckbar ist und in dieser Längsbohrung ein geringes Spiel besitzt. An diesem zentralen Schaft 1 ist ein schraubenflächenartig umlaufendes Band 4 vorgesehen. Die auf die Länge des schraubenflächenartig umlaufenden Bandes 4 bezogene durchschnittliche Breite B desselben ist größer als der Außendurchmesser D des zentralen Schaftes 1. Diese durchschnittliche Breite wird in der Weise bestimmt, daß über die gesamte Länge des schraubenflächenartig umlaufenden Bandes 4 die radialen Breiten an einzelnen, in gleichen Abständen aufeinanderfolgenden Stellen gemessen werden, diese so gewonnenen Werte summiert werden und der Summenwert durch die Anzahl der Meßstellen dividiert wird.

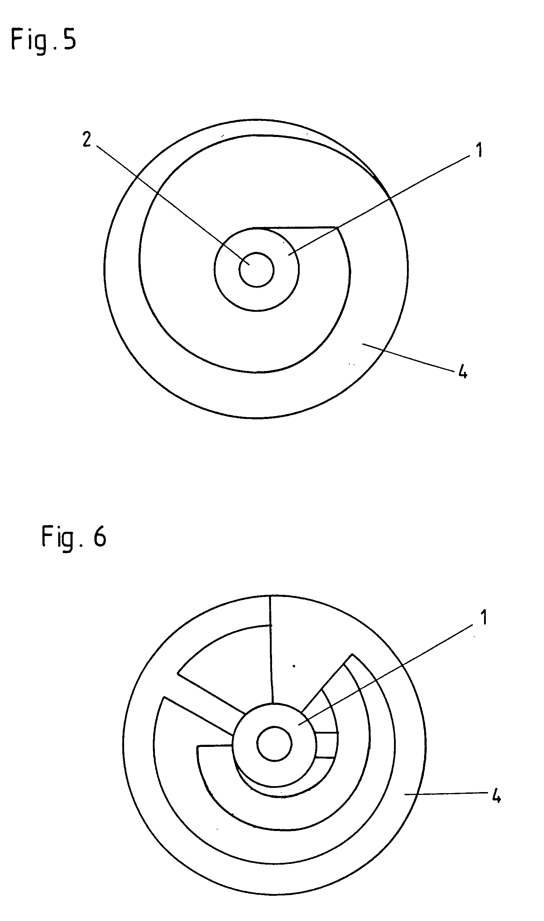

Das Verhältnis des mittleren Außendurchmessers AD des schraubenflächenartig umlaufenden Bandes 4 zum Außendurchmesser D des zentralen Schaftes 1 beträgt beim hier veranschaulichten Ausführungsbeispiel etwa 3,5 : 1. Die Steigung S des schraubenflächenartig umlaufenden Bandes 4 beträgt circa 15 mm. Zumindest der Teil des schraubenflächenartig umlaufenden Bandes 4, der bei der Montage mit der Wärmedämmplatte 5 vorlaufend in Wirkverbindung tritt, weist eine mit zunehmender Steigung zunehmende Breite auf, zeigt also einen spiralförmigen Verlauf (Fig. 5). Das schraubenflächenartig umlaufende Band erstreckt sich hier nur über einen Teil der Länge L des zentralen Schaftes 1. Diese Länge L beträgt etwa 100 mm. Der Anfang des zumindest vorerst spiralförmig verlaufenden, schraubenflächenartigen Bandes 4 liegt etwa im Längsmittelbereich des zentralen Schaftes 1. An der einen äußeren Stirnseite 13 des Schaftes 1 ist eine dem Ansatz und dem Angriff eines Drehwerkzeuges dienende Nut o. dgl. angeformt, was jedoch in der Zeichnung nicht dargestellt ist. Die Einlaufkante des schraubenflächenartig umlaufenden Bandes 4 und zweckmäßigerweise die Randkante 6 des Bandes ist über seine Länge schneidenartig ausgebildet.

Die hier gezeigte Einrichtung kann auch aus einem metallischen Werkstoff gefertigt sein. Die vorstehend angegebenen Abmessungen und Abmessungsverhältnisse beziehen sich auf das in der Zeichnung gezeigte Ausführungsbeispiel. Diese Abmessungen und Abmessungsverhältnisse sind den Materialien anzupassen, aus welchen die Wärmedämmplatten gefertigt sind. Diese Abmessungen können daher sowohl nach oben wie nach unten variieren.

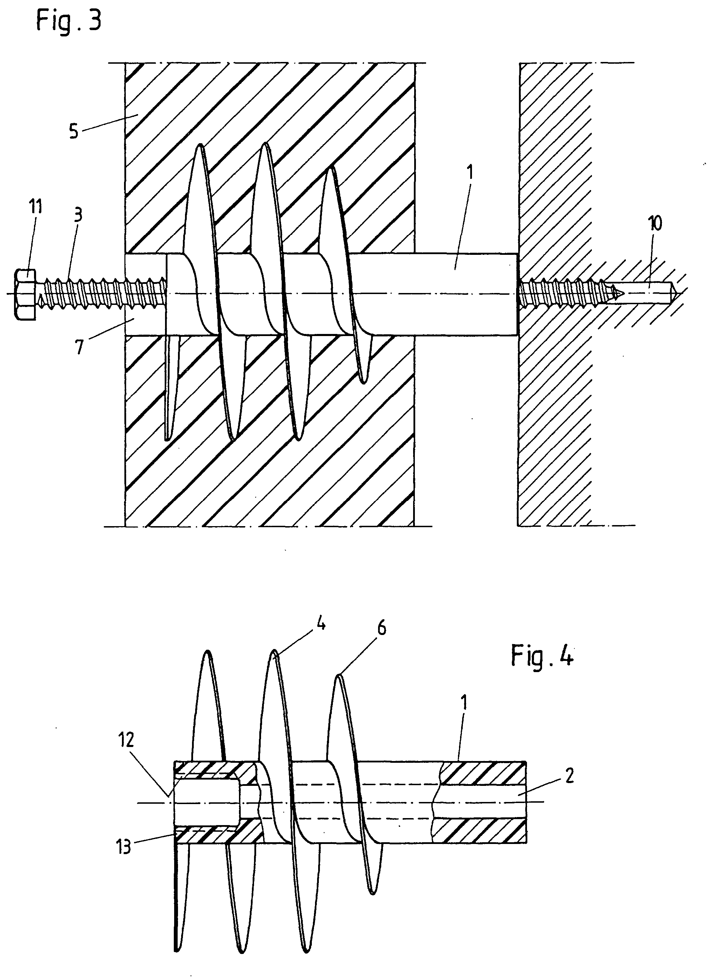

Die Fig. 2 und 3 zeigen nun zwei aufeinanderfolgende Arbeitsschritte bei der Montage einer Wärmedämmplatte 5 mit dem in Fig. 1 gezeigten Ausführungsbeispiel. An jener Stelle, an welcher die Anbringung der Einrichtung vorgesehen ist, werden in der Wärmedämmplatte 5 Bohrungen 7 vorgesehen, deren Durchmesser dem Durchmesser des zentralen Schaftes 1 entspricht. Die so vorbereitete Wärmedämmplatte 5 wird dann gegenüber der Wand 8 ausgerichtet und anschließend wird mit einem geeigneten Drehschrauber die Einrichtung in die Bohrung 7 eingedreht, bis deren innere Stirnseite 9 an der Wand 8 anliegt. Das schraubenflächenartig umlaufende Band 4 schneidet sich dabei in das Material der Wärmedämmplatte 5 ein (Fig. 2). Anschließend wird durch die Längsbohrung 2 der Einrichtung ein Bohrer eingeführt und in der Wand 8 ein Bohrloch 10 gebohrt (Fig. 3). Dann wird die Befestigungsschraube 3 durch Längsbohrung 2 hindurchgesteckt und in das Bohrloch 10 eingedreht, bis deren Kopf an der äußeren Stirnseite 13 der Einrichtung anliegt. Durch Drehen der Einrichtung, die mit ihrer Stirnseite 9 an der Wand anliegt, kann - bevor die Befestigungsschraube gesetzt wird - der Abstand der Wärmedämmplatte 5 zur Wand 8 eingestellt werden. Die verbliebene Öffnung in der Wärmedämmplatte 5 wird nach dem Einsetzen der Befestigungsschraube 3 verschlossen und verspachtelt.

Die Einrichtung nach Fig. 1 zeigt eine Längsbohrung 2 mit über die Länge L des Schaftes 1 gleichem Durchmesser, der so groß gewählt ist, daß die Befestigungsschraube 3 ungehindert durchgesteckt werden kann.

Beim Ausführungsbeispiel nach Fig. 4 ist die Längsbohrung 2 abgestuft, weist also Abschnitte mit unterschiedlichen Durchmessern auf. Der der äußeren Stirnseite 13 des Schaftes 1 benachbart liegende Abschnitt der Längsbohrung 2 besitzt einen vergrößerten Durchmesser, und dieser Abschnitt ist als Gewindebohrung 12 ausgebildet. Dabei ist die axiale Länge der Gewindebohrung 12 kürzer als jene der Längsbohrung 2 mit dem kleineren Durchmesser. Bei dieser Ausbildung der Einrichtung kann in die Gewindebohrung, wenn die Befestigungsschraube gesetzt ist, ein Schraubanker eingedreht werden, an dem eine Wand- oder Deckenverkleidung anbringbar oder abhängbar ist.

Beide gezeigten Ausführungsbeispiele zeigen schraubenflächenartig verlaufende Bänder mit geschlossener Oberfläche. Es wäre denkbar, diese Bänder durchbrochen auszubilden, beispielsweise nur einen außen verlaufenden bandartigen Streifen vorzusehen, der über speichenartige Streben mit dem zentralen Schaft 1 verbunden ist. Fig. 6 zeigt eine solche Ausführungsform, gesehen von der äußeren Stirnseite her.

Vorstehend ist von einer äußeren Stirnseite 13 bzw. einer inneren Stirnseite 9 die Rede. Diese Hinweise beziehen sich auf den montagegerechten Einbau der Einrichtung (Fig. 2, Fig. 3), wobei der Hinweis "innere" sich auf den der Wand 8 benachbarten Teil bezieht und der Begriff "äußere" auf den der Wand 8 abgewandten Teil.

Das relativ breite schraubenflächenartig verlaufende Band 4 bildet einen sicheren und festen Anker für die Halterung der Wärmedämmplatte. Diese Wärmedämmplatte kann aus geschäumtem Kunststoff bestehen oder auch aus fasrigen Materialien aufgebaut sein. Die Haltekraft, die durch das schraubenflächenartig verlaufende Band erzielt werden kann, ist nach Versuchen erheblich größer als die hier vorgeschriebene Haltekraft gemäß den einschlägigen Bestimmungen.

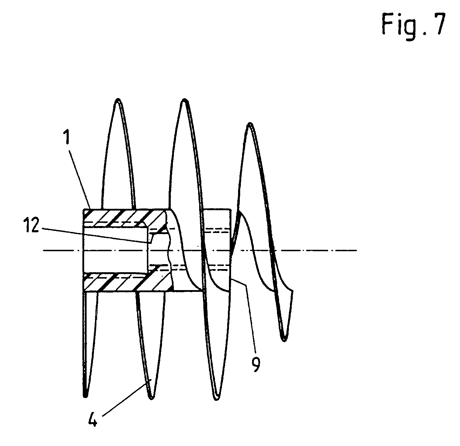

Ein weiteres Ausführungsbeispiel ist nun in Fig. 7 dargestellt. Wie diese Darstellung zeigt, ist hier die axiale Länge des schraubenflächenartig umlaufenden Bandes 4 größer als die Länge L des zentralen Schaftes 1, der von einer Gewindebohrung 12 durchsetzt ist, so daß das schraubenflächenartig verlaufende Band 4 zumindest gegenüber der einen, inneren Stirnseite 9 des Schaftes 1 vorsteht. Grundsätzlich wäre es möglich, das schraubenflächenartig umlaufende Band auch beidseitig gegenüber dem zentralen Schaft 1 vorstehen zu lassen. Die Steigung des Gewindes der Gewindebohrung 12 ist gleich groß wie die Steigung der Befestigungsschraube 3, die hier nicht dargestellt ist. Bei der Montage wird vorerst der Befestiger nach Fig. 4 mit einem geeigneten Werkzeug in die Wärmedämmplatte eingedreht, und zwar mit dem fliegenden Ende des schraubenflächenartig umlaufenden Bandes 4 voraus. Anschließend wird die Wärmedämmplatte gegenüber der Wand oder Decke ausgerichtet, und dann wird in die Decke oder Wand ein Loch zur Aufnahme der Befestigungsschraube gebohrt, wobei der dazu erforderliche Bohrer durch die Gewindebohrung 12 hindurchgeführt wird. Dann wird die Befestigungsschraube eingedreht, die formschlüssig in die Gewindebohrung 12 eingreift, so daß durch diesen Formschluß der Abstand zwischen Wand und Wärmedämmplatte fixierbar ist.

Das schraubenflächenartig umlaufende Band 4 kann über seine axiale Länge einen im wesentlichen konstanten Durchmesser aufweisen oder einen konischen Anzug, wie hier im Zusammenhang mit Fig. 1 gezeigt.

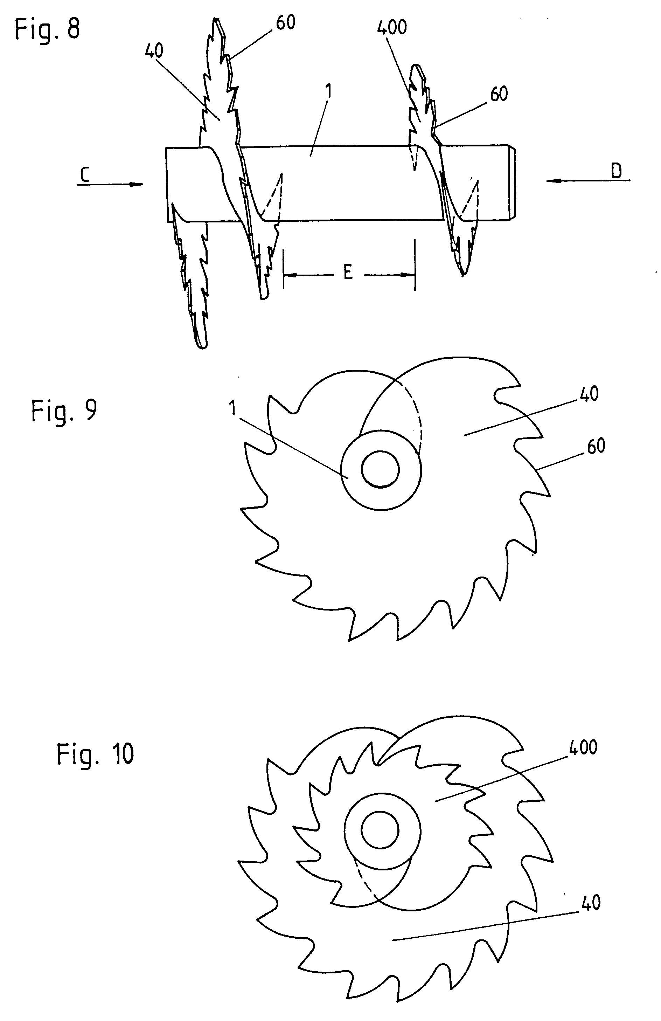

Bei den vorstehend beschriebenen und erörterten Ausführungsbeispielen ist das jeweilige schraubenflächenartig umlaufende Band einstückig, d.h., es erstreckt sich ohne Unterbruch von seinem Anfang bis zu seinem Ende. Die Fig. 8 bis 10 veranschaulichen nun ein Ausführungsbeispiel, bei welchem dieses schraubenflächenartig umlaufende Band aus zwei Abschnitten besteht, nämlich dem ersten Abschnitt 40 und dem zweiten Abschnitt 400. In Achsrichtung des Schaftes 1 folgen also aufeinander zwei schraubenflächenartig umlaufende Bänder. Darüberhinaus besitzen diese beiden Abschnitte praktisch nur einen Umlauf, d.h., jeder dieser beiden Abschnitte erstreckt sich über einen Winkelbereich von etwas über 360°. Darüberhinaus sind die Randkanten 60 gezahnt, zweckmäßigerweise sind die Randkanten sägezahnförmig gestaltet. Aus den Fig. 8 bis 10 ist auch ersichtlich, daß die jeweiligen Außendurchmesser dieser beiden Abschnitte 40 und 400 unterschiedlich groß sind.

Ein besonderer Vorteil der erfindungsgemäßen Einrichtung liegt auch darin, daß für die Befestigung der Wärmedämmplatte kein Kleber mehr verwendet werden muß und daß die Vorbehandlung des Untergrundes, also der Wand, an der die Wärmedämmplatte zu befestigen ist, zur Gänze entfällt.

### Legende zu den Hinweisziffern:

- 1: zentraler Schaft
- 2: Längsbohrung
- 3: Befestigungsschraube
- 4: Band
- 40: erster Abschnitt
- 400: zweiter Abschnitt
- 5: Wärmedämmplatte
- 6: Randkante
- 60: gezahnter Rand
- 7: Bohrung
- 8: Wand
- 9: innere Stirnseite
- 10: Bohrloch
- 11: Kopf
- 12: Gewindebohrung
- 13: äußere Stimkante

## Patentansprüche

1. Einrichtung zur distanzierten Befestigung von Wärmedämmplatten an Wänden, Decken o. dgl., die aus einem zentralen, eine Längsbohrung (2) zur Aufnahme einer Befestigungsschraube (3) aufweisenden Schaft (1) mit mindestens einem um diesen Schaft (1) schraubenflächenartig umlaufenden Band (4) besteht, wobei die auf die Länge des schraubenflächenartig umlaufenden Bandes (4) bezogene durchschnittliche Breite(B)desselben gleich, vorzugsweise größer als der Außendurchmesser (D) des zentralen Schaftes (1) ist und wobei an der einen äußeren Stirnseite (13) des Schaftes (1) eine dem Ansatz und Angriff eines Drehwerkzeuges dienende Nut o. dgl. aus- oder angeformt ist.

2. Einrichtung nach Anspruch 1, **dadurch gekennzeichnet, daß** das Verhältnis des mittleren Außendurchmessers (AD) des schraubenflächenartig umlaufendes Bandes (4) zum Außendurchmesser (D) des zentralen Schaftes (1) etwa 3,5 : 1 beträgt.

3. Einrichtung nach Anspruch 1, **dadurch gekennzeichnet, daß** die Steigung (S) des schraubenflächenartig verlaufenden Bandes (4) etwa 13 bis 16 mm beträgt.

4. Einrichtung nach Anspruch 1, **dadurch gekennzeichnet, daß** zumindest der Teil des schraubenflächenartig verlaufenden Bandes (4), der bei der Montage mit der Wärmedämmplatte (5) vorlaufend in Wirkverbindung tritt, in an sich bekannter Weise eine mit zunehmender Steigung zunehmende Breite (B) aufweist, also einen spiralförmigen Verlauf zeigt (Fig. 5).

5. Einrichtung nach einem der Ansprüche 1 bis 4, **dadurch gekennzeichnet, daß** sich das schraubenflächenartig verlaufende Band (4) nur über einen Teil der Länge (L) des zentralen Schaftes (1) erstreckt.

6. Einrichtung nach einem der Ansprüche 1 bis 5, **dadurch gekennzeichnet, daß** der Anfang des zumindest vorerst spiralförmig verlaufenden, schraubenflächenartig verlaufenden Bandes (4) etwa im Längsmittelbereich des zentralen Schaftes (1) liegt.

7. Einrichtung nach Anspruch 1, **dadurch gekennzeichnet, daß** die Längsbohrung (2) abgestuft ist, also Abschnitte mit unterschiedlichen Durchmessern aufweist (Fig. 4).

8. Einrichtung nach Anspruch 1 und 7, **dadurch gekennzeichnet, daß** der der äußeren Stirnseite (13) des Schaftes (1) benachbart liegende Abschnitt der Längsbohrung (2) einen vergrößerten Durchmesser aufweist und dieser Abschnitt der Längsbohrung als Gewindebohrung (12) ausgebildet ist.

9. Einrichtung nach Anspruch 8, **dadurch gekennzeichnet, daß** die axiale Länge der Gewindebohrung (12) kürzer ist als jene der Längsbohrung (2) mit dem kleineren Durchmesser.

10. Einrichtung nach Anspruch 9, **dadurch gekennzeichnet, daß** der Durchmesser der Längsbohrung (2) bzw. deren verjüngter Durchmesser dem Außendurchmesser der Befestigungsschraube (3) entspricht.

11. Einrichtung nach Anspruch 1, **dadurch gekennzeichnet, daß** das schraubenflächenartig verlaufende Band (4) durchbrochen ist (Fig. 6).

12. Einrichtung nach Anspruch 1, **dadurch gekennzeichnet, daß** die Einlaufkante des schraubenflächenartigen Bandes (4) und gegebenenfalls die Randkante (6) des Bandes über seine Länge schneidenartig ausgebildet ist.

13. Einrichtung nach Anspruch 1, **dadurch gekennzeichnet, daß** die axiale Länge des schraubenflächenartig umlaufenden Bandes (4) größer ist als die Länge (L) des zentralen Schaftes (1) (Fig. 7).

14. Einrichtung nach Anspruch 13, **dadurch gekennzeichnet, daß** das schraubenflächenartig umlaufende Band (4) den zentralen Schaft (1) zumindest einseitig überragt (Fig. 7).

15. Einrichtung nach Anspruch 13 oder 14, **dadurch gekennzeichnet, daß** die Längsbohrung des zentralen Schaftes (1) als Gewindebohrung (12) ausgebildet ist.

16. Einrichtung nach Anspruch 15, **dadurch gekennzeichnet, daß** die Steigung des Gewindes der Gewindebohrung (12) gleich ist der Steigung des Gewindes der Befestigungsschraube (3).

17. Einrichtung nach Anspruch 1, **dadurch gekennzeichnet, daß** über die Länge des Schaftes (1) mindestens zwei in Achsrichtung des Schaftes aufeinanderfolgende schraubenflächenartig umlaufende Bänder (40, 400) vorgesehen sind.

18. Einrichtung nach Anspruch 1 oder 12, **dadurch gekennzeichnet, daß** die Randkanten der schraubenflächenartig umlaufenden Bänder gezahnt, vorzugsweise sägezahnförmig gestaltet sind.

19. Einrichtung nach Anspruch 17, **dadurch gekennzeichnet, daß** die einzelnen schraubenflächenartig umlaufenden Bänder (40, 400) sich über einen Winkelbereich von etwas mehr als 360°, vorzugsweise über 420° erstrecken (Fig. 9 und 10).

20. Einrichtung nach Anspruch 17, **dadurch gekennzeichnet, daß** der Abstand (E) der beiden in Achsrichtung des Schaftes (1) aufeinanderfolgenden schraubenflächenartig umlaufenden Bänder (40, 400) etwa der durchschnittlichen Breite der Bänder entspricht, vorzugsweise größer als diese ist.

21. Einrichtung nach Anspruch 19, **dadurch gekennzeichnet, daß** die in Achsrichtung gesehen sich jeweils überdeckenden Bereiche der beiden Bänder (40, 400) an einander gegenüberliegenden Stellen des Schaftes vorgesehen sind (Fig. 9 und 10).

## Claims

1. A device for fastening thermal insulation panels in a spaced manner to walls, ceilings or the like, which comprises a central shaft (1) provided with a longitudinal bore (2) for receiving a fastening screw (3) and having at least one strip (4) extending in a helical manner around this shaft (1), wherein the average width (**B**) - as compared to its length-of the strip (4) extending in a helical manner is equal to, and preferably larger than, the outside diameter (**D**) of the central shaft (1), and wherein a groove or the like used for the application and engagement of a rotating tool is formed in or on one external end face (13) of the shaft (1).

2. A device according to Claim 1, **characterized in that** the ratio of the average outside diameter (**AD**) of the strip (4) extending in a helical manner to the outside diameter (**D**) of the central shaft (1) amounts to approximately 3·5:1.

3. A device according to Claim 1, **characterized in that** the pitch (**S**) of the strip (4) extending in a helical manner amounts to approximately 13 to 16 mm.

4. A device according to Claim 1, **characterized in that** at least the part of the strip (4) extending in a helical manner, which is operatively connected beforehand to the thermal insulation panel (5) during assembly, is provided in a manner known *per se* with a width (**B**) increasing as the pitch increases, *i.e.* has a spiral pattern (Fig. 5).

5. A device according to one of Claims 1 to 4, **characterized in that** the strip (4) extending in a helical manner extends only over part of the length (**L**) of the central shaft (1).

6. A device according to one of Claims 1 to 5, **characterized in that** the beginning of the strip (4) extending at least initially in a spiral shape and extending in a helical manner is situated approximately in the longitudinal middle region of the central shaft (1).

7. A device according to Claim 1, **characterized in that** the longitudinal bore (2) is stepped. *i.e.* has portions of different diameters (Fig. 4).

8. A device according to Claims 1 and 7, **characterized in that** the portion of the longitudinal bore (2) adjacent to the external end face (13) of the shaft (1) has an enlarged diameter and this portion of the longitudinal bore is designed in the form of a threaded bore (12).

9. A device according to Claim 8, **characterized in that** the axial length of the threaded bore (12) is shorter than that of the longitudinal bore (2) with the smaller diameter.

10. A device according to Claim 9, **characterized in that** the diameter of the longitudinal bore (2) or the inwardly tapered diameter thereof corresponds to the outside diameter of the fastening screw (3).

11. A device according to Claim 1, **characterized in that** the strip (4) extending in a helical manner is interrupted (Fig. 6).

12. A device according to Claim 1, **characterized in that** the run-in edge of the helical strip (4) and optionally the boundary edge (6) of the strip is formed in the manner of a blade over its length.

13. A device according to Claim 1, **characterized in that** the axial length of the strip (4) extending in a helical manner is larger than the length (**L**) of the central shaft (1) (Fig. 7).

14. A device according to Claim 13, **characterized in that** the strip (4) extending in a helical manner projects beyond the central shaft (1) at least on one side (Fig. 7).

15. A device according to Claim 13 or 14, **characterized in that** the longitudinal bore of the central shaft (1) is designed in the form of a threaded bore (12).

16. A device according to Claim 15, **characterized in that** the pitch of the thread of the threaded bore (12) is equal to the pitch of the thread of the fastening screw (3).

17. A device according to Claim 1, **characterized in that** at least two strips (40, 400) extending in a helical manner in succession in the axial direction of the shaft (1) are provided over the length of the shaft.

18. A device according to Claim 1 or 2, **characterized in that** the boundary edges of the strips extending in a helical manner are toothed, preferably in a serrated manner.

19. A device according to Claim 17, **characterized in that** the individual strips (40, 400) extending in a helical manner extend over an angular range of for example more than 360°, and preferably over 420° (Figs. 9 and 10).

20. A device according to Claim 17, **characterized in that** the distance (**E**) of the two strips (40, 400) extending in a helical manner in succession in the axial direction of the shaft (1) corresponds approximately to the average width of the strips and is preferably larger than them.

21. A device according to Claim 19, **characterized in that** the regions - mutually overlapping as viewed in the axial direction - of the two strips (40. 400) are provided at mutually opposed points on the shaft (Figs. 9 and 10).

## Revendications

1. Dispositif de fixation à distance de plaques isolantes aux murs, aux plafonds ou analogues, qui est constitué d'un arbre central (1) présentant un orifice longitudinal (2) pour recevoir une vis de fixation (3) avec au moins une bande périphérique hélicoïdale (4) entourant cet arbre (1), dispositif dans lequel la largeur moyenne (B) de ladite bande s'appliquant à la longueur de la bande périphérique hélicoïdale (4) est égale, de préférence supérieure au diamètre extérieur (D) de l'arbre central (1), et dans lequel une encoche ou analogue servant à recevoir et à engager un outil de rotation est moulée ou ménagée sur le côté avant extérieur (13) de l'arbre (1).

2. Dispositif selon la revendication 1, **caractérisé en ce que** le rapport du diamètre extérieur moyen (AD) de la bande périphérique hélicoïdale (4) au diamètre extérieur (D) de l'arbre central (1) se situe plus ou moins dans une plage de 3,5:1.

3. Dispositif selon la revendication 1, **caractérisé en ce que** le pas (S) de la bande hélicoïdale (4) se situe dans une plage d'environ 13 à 16 mm.

4. Dispositif selon la revendication 1, **caractérisé en ce qu'**au moins la partie de la bande hélicoïdale (4), qui entre en action en premier lors du montage avec la plaque isolante (5), présente de manière connue en soi une largeur (B) qui croît en même temps que le pas, c'est-à-dire qu'elle présente un déroulement en spirale (Fig. 5).

5. Dispositif selon l'une quelconque des revendication 1 à 4, **caractérisé en ce que** la bande hélicoïdale (4) ne s'étend que sur une partie de la longueur (L) de l'arbre central (1).

6. Dispositif selon l'une quelconque des revendication 1 à 5, **caractérisé en ce que** le départ de la bande hélicoïdale (4) s'étendant au moins au début en spirale se situe plus ou moins dans la zone centrale longitudinale de l'arbre central (1).

7. Dispositif selon la revendication 1, **caractérisé en ce que** l'orifice longitudinal (2) est étagé, c'est-à-dire qu'il présente des sections de diamètres différents (Fig. 4).

8. Dispositif selon les revendications 1 et 7, **caractérisé en ce que** la section de l'orifice longitudinal (2) qui est voisine du côté extérieur avant (13) de l'arbre (1) présente un diamètre plus grand et cette section de l'orifice longitudinal se présente sous la forme d'un orifice taraudé (12).

9. Dispositif selon la revendication 8, **caractérisé en ce que** la longueur axiale de l'orifice taraudé (12) est plus courte que celle de l'orifice longitudinal (2) de plus petit diamètre.

10. Dispositif selon la revendication 9, **caractérisé en ce que** le diamètre de l'orifice longitudinal (2) ou son diamètre décroissant correspond au diamètre externe de la vis de fixation (3).

11. Dispositif selon la revendication 1, **caractérisé en ce que** la bande hélicoïdale (4) est évidée (Fig. 6).

12. Dispositif selon la revendication 1, **caractérisé en ce que** l'arête d'entrée de la bande hélicoïdale (4) et, éventuellement, l'arête de bord (6) de la bande présentent des découpes sur leur longueur.

13. Dispositif selon la revendication 1, **caractérisé en ce que** la longueur axiale de la bande périphérique hélicoïdale (4) est supérieure à la longueur (L) de l'arbre central (1) (Fig. 7).

14. Dispositif selon la revendication 13, **caractérisé en ce que** la bande périphérique hélicoïdale (4) fait saillie de l'arbre central (1) au moins sur un côté (Fig. 7).

15. Dispositif selon la revendication 13 ou 14, **caractérisé en ce que** l'orifice longitudinal de l'arbre central (1) se présente sous la forme d'un orifice taraudé (12).

16. Dispositif selon la revendication 15, **caractérisé en ce que** le pas du filet de l'orifice taraudé (12) est égal au pas du filet de la vis de fixation (3).

17. Dispositif selon la revendication 1, **caractérisé en ce qu'**il est prévu sur la longueur de l'arbre (1) au moins deux bandes périphériques hélicoïdales (40, 400) se succédant dans la direction axiale de l'arbre.

18. Dispositif selon la revendication 1 ou 12, **caractérisé en ce que** les arêtes de bord des bandes périphériques hélicoïdales sont dentelées, de préférence en forme de dents de scie.

19. Dispositif selon la revendication 17, **caractérisé en ce que** les bandes périphériques hélicoïdales individuelles (40, 400) s'étendant sur une zone angulaire d'environ plus de 360°, de préférence sur 420° (Fig. 9 et 10).

20. Dispositif selon la revendication 17, **caractérisé en ce que** la distance (E) des deux bandes périphériques hélicoïdales (40, 400) se succédant dans la direction axiale de l'arbre (1) correspond plus ou moins à la largeur moyenne des bandes, de préférence est supérieure à celle-ci.

21. Dispositif selon la revendication 19, **caractérisé en ce que** les zones des deux bandes (40, 400) qui se chevauchent respectivement en observant dans la direction axiale sont ménagées en des points opposés de l'arbre (Fig. 9 et 10).
